# EUROPÄISCHE PATENTSCHRIFT

(11) **EP 0 714 865 B1**
(45) Veröffentlichungstag und Bekanntmachung des Hinweises auf die Patenterteilung: **24.02.1999**
(21) Anmeldenummer: 95116783.2
(22) Anmeldetag: 25.10.1995
(51) Int. Cl.: C04B 28/02

(54) **Zementsuspension zum Verpressen von Hohlräumen in Steinmaterial**
Cement suspension for injecting cavities in stone material
Suspension de ciment pour emboner sous pression des cavités en matériau de pierre

(30) Priorität: 23.11.1994 DE 4441662
(43) Veröffentlichungstag der Anmeldung: 05.06.1996
(73) Patentinhaber: Rödl GmbH, 90427 Nürnberg (DE)
(72) Erfinder: Krauss, Hans-Günther, D-90765 Fürth (DE)
(74) Vertreter: Böhme, Volker, Dipl.-Ing.

(56) Entgegenhaltungen:
- EP-A- 0 455 940
- DR. H. KÜHL: "Zement-Chemie Bd. 3" 1961 , VEB VERLAG TECHNIK BERLIN , BERLIN DE XP002000116 * Seite 551, Absatz 3 * * Seite 552, Absatz 3 * * Seite 576 *

## Beschreibung

Die Erfindung betrifft eine Zementsupension zum Verpressen von Hohlräumen in Steinmaterial, bei der Feinstzement und Quarzmehl umfassender Bindemittelanteil, Verflüssiger, Quellmittel, wasserrückhaltendes Polyethylenoxid und Wasser zusammengemischt sind, bei der sämtliche Teilchen mit einer Korngröße < 40µm vorgesehen sind und der Wasser/Bindemittel-Faktor 0,5-1 beträgt, und bei der das wasserrückhaltende Polyethylenoxid ein Molekulargewicht von mindestens 40 000 aufweist und mit 0,03 - 0,09 GT auf 100 GT Bindemittelanteil vorgesehen ist.

Die Festigkeit des nach dem Aushärten der Zementsuspension anfallenden Zementsteins wird zu Prüfzwecken an einem aus der Zementsuspension hergestellten bzw. aus dem Zementstein bestehenden prismatischen Körper gemessen. Dazu wird ein 4x4x16 cm großer Block in zwei Teile zerbrochen und werden die Blockteile mit einer Kraft gepreßt, bis sie nachgeben. Es besteht der Wunsch, die Festigkeit des hergestellten Zementsteins je nach Art des Steinmaterials des Bauteils, in das die Zementsuspension verpreßt wird, einstellen zu können. Besteht z.B. das Bauteil aus einem Betonmaterial relativ niedriger Festigkeit und befindet sich in dem Bauteil ein hohlraumfüllender Zementstein hoher Festigkeit, so hat das Bauteil seine Gesamtfestigkeitseigenschaften und auch seine Elastizitätseigenschaften verändert. Die Zementsuspension soll wahlweise so eingestellt sein, daß sich eine vorgegebene Festigkeit im Bereich von 3-25 N/mm² ergibt. Wenn man versucht, die Festigkeit über den Wassergehalt der Zementsuspension zu steuern, dann treten eine Entmischung der Suspension und eine Instabilität der Suspension beim Verpressen auf. Deswegen soll das Verhältnis Wasser/Bindemittelanteil nur in engen Grenzen schwanken.

Bei einer bekannten (EP-OS 0 455 940) Zementsuspension der eingangs genannten Art ist der Bindemittelanteil nur von Feinstzement und Quarzmehl gebildet. Die Zementsuspension hat einen relativ hohen Wasser/Feststoff-Faktor und das Verhältnis GT Wasser/GT Feinstzement ist mit gleich oder > 0,4 oder 0,6 angegeben. Es werden auf 100 GT Feinstzement maximal 3,2 GT Quarzmehl (Mikrosilika) zugegeben, so daß das Quarzmehl maximal 3,1 Gew.% des Bindemittelanteils ausmacht. Der nach dem Aushärten der Zementsuspension anfallende Zementstein weist eine verbesserte kompakte Konsistenz bzw. eine verbesserte Endfestigkeit auf. Bei Versuchen zeigt sich, daß der aus der bekannten Zementsuspension hergestellte Zementstein bei 3,2 GT Quarzmehl eine Festigkeit von 30-40 N/mm² aufweist und bei 1,5 GT Quarzmehl noch immer eine Festigkeit von 15-25 N/mm² aufweist.

Daneben ist es aus "Zement-Chemie", Band III, 551 bekannt, Portlandzement Traß zuzusetzen. Der dabei zu erzielende technische Effekt wird kontrovers diskutiert.

Eine Aufgabe der Erfindung ist es nun, eine Zementsuspension der eingangs genannten Art zu schaffen, bei der die Komponenten des Bindemittelanteils im Hinblick auf eine von 3N/mm² bis 25N/mm² variierende Festigkeit des zu erzeugenden Zementsteins einstellbar sind. Die erfindungsgemäße Zementsuspension ist, diese Aufgabe lösend, dadurch gekennzeichnet, daß der Bindemittelanteil zu 90-50 Gew.% aus Feinstzement, zu 1-8 Gew.% aus Quarzmehl und zu 10-50 Gew.% aus Traßmaterial besteht, wobei auch das Traßmaterial mit einer Korngröße < 40µm vorgesehen ist.

Die Erfindung setzt also bei einer Zementsuspension zum Verpressen von Hohlräumen in Steinmaterial zwecks Steuerung der Festigkeit des zu erzeugenden Zementsteins Traßmaterial ein. Je geringer die erwünschte Festigkeit ist, desto größer wird die Traßkomponente und desto kleiner wird die Feinstzementkomponente. Dabei wird das Traßmaterial ungewöhnlicherweise in der Feinheit < 40µm verwendet. Das Verhältnis Feinstzement/Traßmaterial bewegt sich zwischen 90:10 und 50:50. Die Verminderung der Festigkeit wird durch die Verminderung des Anteils an Feinstzement erreicht. Der gewünschte Wasser/Bindemittel-Faktor wird durch eine entsprechend erhöhte Zugabe von Traßmaterial erzielt. Um diese Einstellbarkeit der Festigkeit und des Wasser/Bindemittel-Faktors zu erreichen, ohne dabei die Stabilität und Verpreßbarkeit der Suspension zu gefährden, wird gleichzeitig der Anteil an Quarzmehl angepaßt. Dadurch wird zusätzlich ein zu starker Festigkeitsverlust des Zementsteins vermieden.

Besonders zweckmäßig und vorteilhaft ist es, daß der Wasser/Bindemittel-Faktor 0,5-1,0, vorzugsweise 0,6-0,8 beträgt. Dieser enge Bereich des Wasser/Bindemittemittel-Faktors gewährleistet folgendes: Die Suspension ist in sehr enge Risse zu injizieren. Größere Hohlräume sind durch feine Risse zu füllen. Ein geringes Sedementieren der Supsension und eine geringe Entmischungsneigung der Supension liegen vor. Ein kraftschlüssiges Verbinden der Rißufer sowie der Hohlraumflanken und eine gute Zusammenhaltekraft der ausgehärteten Suspension sind gegeben.

Besonders zweckmäßig und vorteilhaft ist es auch, wenn das Quarzmehl mindestens 1 Gew.% und/oder höchstens 8 Gew.% des Bindemittelanteils ist. In diesem engen Anteilbsreich für Quarzmehl läßt sich die Steuerung der Festigkeit durch Variation der Anteile an Feinzement und Traßmaterial verbessert durchführen.

Mit Traßmaterial sind Traß und eine Hochofenschlacke, deren chemische Zusammensetzung mit der von Traß vergleichbar ist, gemeint. Unter Traß ist ein gemahlener, kalkarmer, vulkanischer Tuffstein zu verstehen, der z.B. 30 - 33 % salzsäurelösliche Kieselsäure enthält. Traß weist in der Regel folgende Zusammensetzungen auf: SiO2 ca. 50-70%, Al2O3 ca. 11-15%, Fe2O3 ca. 4-6%, CaO ca. 10-14% und MgO ca. 2-4%.

Beim Mischen der Zementsuspension werden der Feinstzement und das Traßmaterial in der Regel getrennt voneinander zugegeben; es liegt keine Mischung von Traßmaterial und Feinstzement vor, die gemeinsam zugegeben wird.

Das Quarzmehl weist in der Regel mit 95 M.-% Teilchen < 40µm und zu 50 M.-% Teilchen < 1µm auf. Das Quarzmehl, das man als Microsilica bezeichnen kann, weist also einen hohen Prozentsatz an Teilchen auf, die um ein 10-faches kleiner sind, als die Teilchen des Feinstzements. Das Quarzmehl ist z.B. reines Siliziumdioxid. Zumeist enthält das Quarzmehl, abgesehen von Siliziumdioxid (SiO₂), bis zu insgeamt 10 M-% weitere Bestandteile der Reihe: Fe₂O₃, MgO, K₂O, CaO, Na₂O oder Al₂O₃. Ein derartiges mehrkomponentiges Quarzmehl verbessert die Verbindungskraft des abgebundenen Materials im Riß ganz erheblich.
Das Quarzmehl weist z.B. folgende Zusammensetzung auf:

| | | | | |
|---|---|---|---|---|
| SiO2 | 92 | bis | 97 | M.-% |
| Al2O3 | 0,03 | bis | 0,30 | M.-% |
| Fe2O3 | 1,10 | bis | 4,60 | M.-% |
| TiO2 | | | < 0,01 | M.-% |
| CaO | 0,40 | bis | 0,85 | M.-% |
| MgO | 0,95 | bis | 1,45 | M.-% |
| K2O | 0,50 | bis | 0,60 | M.-% |
| Na2O | 0,30 | bis | 0,50 | M.-% |
| Cl | 0,025 | bis | 0,040 | M.-% |
| Glühverlust | 1,10 | bis | 1,45 | M.-% |
| SO3 | 0,35 | bis | 0,40 | M.-% |
| C | 0,60 | bis | 1,00 | M.-% |

Unter Feinstzement ist hier ein Zement mit einer Korngröße < 40 µm, vorzugsweise < 20 µm, z.B. von < 16 µm oder < 9 µm, zu verstehen, wogegen Normalzement eine Korngröße > 50 µm, z.B. von 63 µm, hat. Das Steinmaterial z.B. ein Stahlbetonbauteil, Fels oder Mauerwerk, soweit hier Hohlräume zu verpressen sind. Die Zementsuspension ist frei von grobteilchenförmigen Zuschlägen sowie Fasern gehalten. Unter Hohlräumen sind Risse, z.B. feine Risse, oder andere Materialfehlstellen zu verstehen, wie sie z.B. bei schlecht verdichtetem Beton vorhanden sind.

Als Verflüssiger dienen z.B. Ligninsulfonate, Naphtalinsulfonsäure und Melaminformaldehydkondensate. Ein Verflüssiger auf Naphtalinbasis ist bevorzugt. Als Quellmittel werden primär Aluminate verwendet, die sehr feinkörnig vorliegen. Es werden 0,25 - 0,35 GT, z.B. 0,3 GT, Quellmittel, primär in Form eines Wirkstoffextraktes, verwendet. Es sind die bekannten Zementarten verwendbar; z.B. werden Zemente auf der Basis von Portland- und Hochofenzement verwendet.

Bei einem Ausführungsbeispiel der Erfindung wird zunächst hochmolekurares Polyethylenoxid mit chlorfreiem, demineralisiertem Wasser zu einer Lösung vermischt, die ausreichend lange stehengelassen wird. Sodann wird in einem sauberen Gefäß demineralisiertes, von Chlorverbindungen freies Wasser mit der Wasser-Polyethylenoxid-Lösung versetzt und ca. 30 Sekunden bei 1 000 - 2 000 U/min aufgemischt. In das versetzte Wasser werden Feinzement, Traß, Quarzmehl und Quellmittel zusammen gemeinsam innerhalb einer Minute unter ständigem Rühren bei 1 000 - 2 000 U/min kontinuierlich zudosiert. Es werden auf 100 GT Feinstzement 7,1 GT Quarzmehl, 43 GT Traß, 0,4 GT Quellmittel, 0,1 GT Polyethylenoxid und 100 GT Wasser angesetzt. Anschließend wird bei weiterlaufendem Rührwerk der Verflüssiger zugegeben und für 3 1/2 Minuten bei 4 000 - 5 000 U/min untergerührt. Diese Zementsuspension wird in einem Mischbehälter mit angeschlossener Kreiselpumpe umgewälzt und weiter aufgeschlossen und zwar während mindestens 10 Minuten. Danach ist die Suspension für das Verpressen bzw. für die Injektion gebrauchsfertig. Damit die Temperatur der Suspension 30° C nicht überschreitet, wird der Mischbehälter mit Wasser gekühlt.

## Patentansprüche

1. Zementsuspension zum Verpressen Von Hohlräumen in Steinmaterial,
bei der Feinstzement und Quarzmehl umfassender Bindemittelanteil, Verflüssiger, Quellmittel, wasserrückhaltendes Polyethylenoxid und Wasser zusammengemischt sind, bei der sämtliche Teilchen mit einer Korngröße < 40µm vorgesehen sind und der Wasser/Bindemittel-Faktor 0,5-1 beträgt und
bei der das wasserrückhaltende Polyethylenoxid ein Molekulargewicht von mindestens 40 000 aufweist und mit 0,03-0,09 GT auf 100 GT Bindemittelanteil vorgesehen ist,
**dadurch gekennzeichnet,**
daß der Bindemittelanteil zu 90-50 Gew. % aus Feinstzement, zu 1-8 Gew. % aus Quarzmehl und zu 10-50 Gew.% aus Traßmaterial besteht, wobei auch das Traßmaterial mit einer Korngröße < 40µm vorgesehen ist.

2. Zementsuspension nach Anspruch 1, **dadurch gekennzeichnet,** daß der Wasser/Bindemittel-Faktor 0,6-0,8 beträgt.

## Claims

1. A cement suspension for injecting into cavities in stone material, wherein binder constituent, comprising fine cement and quartz powder, liquefier, swelling agent, water-retaining polyethyleneoxide and water are mixed together, wherein all the particles are provided with a grain size < 40 µm and the water / binder ratio is 0.5 - 1, and wherein the water-retaining polyethyleneoxide has a molecular weight of at least 40,000 and is provided in an amount of 0.03 - 0.09 parts by weight per 100 parts by weight binder constituent, characterised in that the binder constituent comprises 90-50 wt.% fine cement, 1-8 wt.% quartz powder and 10-50 wt.% trass material, the trass material also being provided with a grain size < 40 µm.

2. A cement suspension according to claim 1, characterised in that the water / binder ratio is 0.6 - 0.8.

## Revendications

1. Suspension de ciment pour injection sous pression dis des cavités de matériau pierreux où une partie liant comprenant du ciment ultralin et de la poudre de quartz, un fluidifiant, un agent gonflant, un poly(oxyde d'éthylène) retenant l'eau et de l'eau sont mélangés, où toutes les particules sont prévues avec une taille de grain < 40 µm et le facteur eau/liant est de 0,5-1 et
où le poly(oxyde d'éthylène) retenant l'eau présente une masse moléculaire d'au moins 40 000 et est prévu à raison de 0,03-0,09 partie en masse pour 100 parties en masse de partie liant, caractérisée en ce que la partie liant consiste à raison de 90-50% en masse en ciment ultrafin, à raison de 1-8 % en masse en poudre de quartz et à raison de 10-50 % en masse en matériau de type trass, où le matériau de type trass est prévu aussi avec une taille de grain < 40 µm.

2. Suspension de ciment selon la revendication 1, caractérisée en ce que le facteur eau/liant est de 0,6-0,8.
